# EUROPÄISCHE PATENTANMELDUNG

(11) **EP 1 396 432 A2**
(43) Veröffentlichungstag der Anmeldung: **10.03.2004**
(21) Anmeldenummer: 03018813.0
(22) Anmeldetag: 19.08.2003
(51) Int. Cl.: B65B 51/10, B65B 7/16, B65B 7/28

(54) **Heisssiegelmaschine zum Verpacken von Produkten, insbesondere von Lebensmitteln**

(30) Priorität: 06.09.2002 DE 10241908
(71) Anmelder: HAGMANN Maschinenbau AG, 2545 Selzach (CH)
(72) Erfinder: Hagmann, Peter, ch-2545 Selzach (CH)
(74) Vertreter: Weiss, Peter, Dr.

(57) **Zusammenfassung**

Bei einer Heisssiegelmaschine zum Verpacken von Produkten (5), insbesondere von Lebensmitteln mit zumindest einer Folie (6) und/oder einer Verpackung, wobei zum Versiegeln zumindest eine Siegelplatte (1) mit zumindest einem Siegelaufsatz (2) zusammenwirkt, soll der zumindest einen Ausnehmung (3) oder Öffnung (4) des Siegelaufsatzes (2) ein nachgiebig bewegbares oder elastisch verformbares Element (8) zugeordnet sein.

## Beschreibung

Die vorliegende Erfindung betrifft eine Heisssiegelmaschine zum Verpacken von Produkten, insbesondere von Lebensmitteln mit zumindest einer Folie und/oder einer Verpackung, wobei zum Versiegeln zumindest eine Siegelplatte mit zumindest einem Siegelaufsatz zusammenwirkt.

Heisssiegelmaschinen sind in vielfältigster Form und Ausführung auf dem Markt bekannt und gebräuchlich. Sie dienen in erster Linie zum Verpacken von beliebigen Gegenständen, Produkten, insbesondere Lebensmittel, Frischprodukte od. dgl.. Herkömmlich wird in einen Siegelaufsatz ein Behälter eingesetzt, dieser mit einem Produkt befüllt und anschliessend der Behälter mittels einer Folie bzw. einer Deckfolie verschlossen und in Randbereichen zum leichten Öffnen und dichten Verschliessen heissgesiegelt. Nachteilig ist jedoch, dass bei flachen Produkten oder geringen Mengen an Nahrungsmittel eine herkömmliche Verpackungsschale meist zu gross und zu teuer ist.

Der vorliegenden Erfindung liegt die Aufgabe zugrunde eine Heisssiegelmaschine der eingangs genannten Gattung zu schaffen, welche die genannten Nachteile beseitigt, und mit welcher auf eine einfache und kostengünstige Weise beliebige Produkte auch in geringen Mengen verpackt werden können.

Zur Lösung dieser Aufgabe führen die Merkmale des Patentanspruches 1 sowie die der nebengeordneten Patentansprüche.

Bei der vorliegenden Erfindung hat sich als besonderes vorteilhaft erwiesen, eine Ausnehmung, insbesondere eine Öffnung eines Siegelaufsatzes, mit einem elastisch verformbaren Element zu überdecken. Dann lässt sich über dieses elastisch verformbare Element eine Bodenfolie auflegen, auf welche ein beliebiges Produkt, bspw. Aufschnitt, Fisch, Fleisch od. dgl. aufgelegt wird. Auf dieses Produkt bzw. auf die Bodenfolie wird dann eine Deckfolie aufgelegt, die dann mit der Bodenfolie in herkömmlicher Weise versiegelt wird. Dabei hat sich als vorteilhaft erwiesen, dass eine Mehrzahl von Abstandhaltern der Siegelplatte zugeordnet sind, die ein Festkleben der Deckfolie an der Siegelplatte verhindern und gleichzeitig Luft oder Gas zwischen Bodenfolie und Deckfolie vor dem Heisssiegeln ausdrücken.

Die Abstandhalter erfüllen zusätzlich noch die Aufgabe, dass möglichst wenig Wärme von der Siegelplatte auf die zu verpackenden Produkte übertragen wird.

Vorzugsweise sind die Abstandhalter aus temperaturbeständigem elastischem Material gebildet und ragen aus der Siegelplatte, insbesondere von dessen Unterseite hervor.

Durch die elastische Ausbildung bzw. elastische Verformbarkeit des Elementes können auch unterschiedlich dicke Produkte sowie auch eine Mehrzahl von unterschiedlichen Produkten mit mehreren Deckfolien zusammen mit der Bodenfolie zu einer Verpackung heissgesiegelt werden, da das elastische Element, welches die Ausnehmung bzw. Öffnung übergreift, nachgiebig ausgebildet ist. Bevorzugt ist dieses wiederlösbar mit dem Siegelaufsatz verbunden um dieses schnell und leicht zu reinigen. Dies ist insbesondere beim Verpacken von frischen Lebensmitteln, wie Fleisch, Wurst, Käse, Fisch od. dgl. von Vorteil.

Dabei soll im Rahmen der vorliegenden Erfindung liegen, dass das elastisch verformbare Element fest oder wiederlösbar die Ausnehmung bzw. die Öffnung des Siegelaufsatzes übergreift. Vorzugsweise ist in einem Randbereich der Ausnehmung bzw. Öffnung ein Absatz gebildet, aus welchem eine Mehrzahl von Zapfenelementen herausragen. In den entsprechenden Randbereichen des elastisch verformbaren ausgebildeten Elementes sind entsprechende Ösen vorgesehen, die zum Einhängen des elastischen Elementes in die Zapfenelemente dienen. Auf diese Weise lässt sich sehr leicht und schnell das elastisch verformbare Elemente von dem Siegelaufsatz abnehmen, um bspw. Verpackungsschalen herkömmlicher Form in die Ausnehmung bzw. Öffnung einzusetzen oder das elastisch verformbare Element zu reinigen. Dieses kann bspw. aus Gummi oder anderen elastischen Materialien, Textilien od. dgl. hergestellt sein. Hierauf ist die Erfindung nicht beschränkt.

Auch hat sich als vorteilhaft bei der vorliegenden Erfindung erwiesen, dass eine Mehrzahl von Abstandhalter in der Siegelplatte vorgesehen sind, die eine Unterseite überragen. Die Abstandhalter sind aus temperaturbeständigem Material, insbesondere Silikon gebildet und sind in unterschiedlichen Anordnungen gruppiert, so dass eine Mehrzahl von verschiedenen Siegelaufsätzen und unterschiedlich angeordneten mit ausgebildeten Öffnungen bzw. Ausnehmungen in eine Heisssiegelmaschine eingesetzt werden kann und mit ein und derselben Siegelplatte bearbeitet werden kann. Dies soll ebenfalls im Rahmen der vorliegenden Erfindung liegen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Querschnitt durch einen Teil einer Heisssiegelmaschine im Bereich der Siegelplatte und des Siegelaufsatzes;
Figur 2 einen schematisch dargestellten Querschnitt durch die Teile der Heisssiegelmaschine gemäss Figur 1 im/einer Ruhelage;
Figuren 3 und 4 schematisch dargestellte Draufsichten auf mögliche Ausbildungen von Siegelaufsätzen;
Figur 5 einen schematisch dargestellten Querschnitt durch ein fertiges verpacktes Produkt.

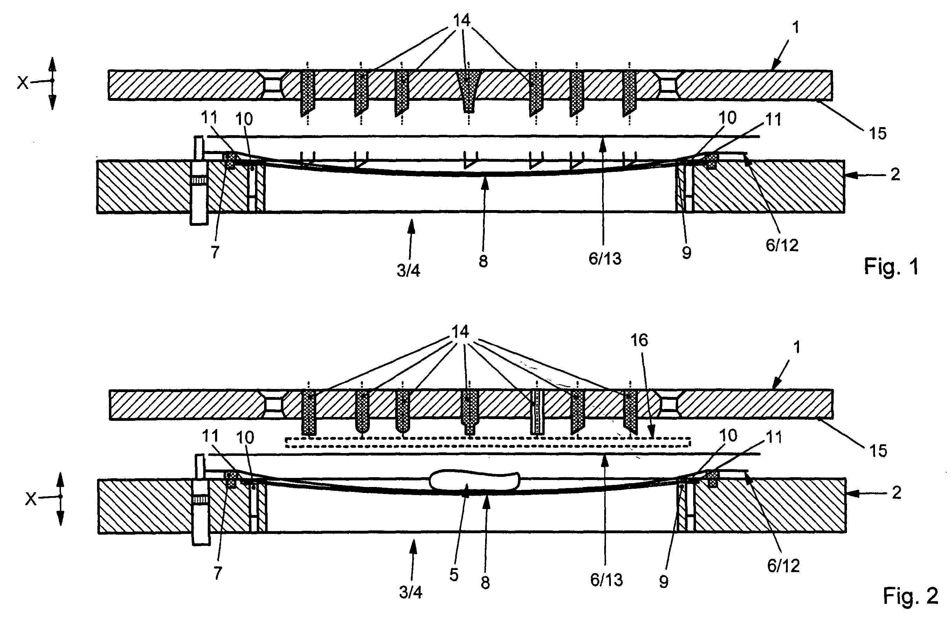

Gemäss Figur 1 weist eine Heisssiegelmaschine eine Siegelplatte 1 und einen Siegelaufsatz 2 auf. Dabei ist entweder die Siegelplatte 1 gegenüber dem Siegelaufsatz 2 oder wie es in Figur 2 ausgeführt ist, der Siegelaufsatz 2 gegenüber der Siegelplatte 1 bewegbar bzw. verfahrbar ausgeführt. Die Siegelplatte 1 ist herkömmlich mit, hier nicht dargestellten, Heizeinrichtungen versehen und ist in einer wählbaren Temperatur beheizbar.

Der Siegelaufsatz 2 besitzt zumindest eine Ausnehmung 3 oder Öffnung 4, die dem Einlegen von bspw. Formschalen od. dgl. dient. In hier nicht dargestellte Formschalen od. dgl. kann ein zuverpackendes Produkt 5, insbesondere Lebensmittel oder frischzuhaltendes Lebensmittel eingelegt werden. Anschliessend lässt sich eine Entnahmeöffnung der Verpackung mittels zumindest einer Folie 6 verschliessen.

Hierzu liegt zumindest ein Teil der Verpackung und der Folie 6 auf einer vorzugsweise umlaufenden Siegelkontur 7 auf und wird mittels der Siegelplatte 1 heissgesiegelt.

Bei der vorliegenden Erfindung hat sich als besonderes vorteilhaft erwiesen, um beliebige Produkte 5, insbesondere Lebensmittel oder frischzuhaltende Lebensmittel in kleineren Chargen oder Mengen zu verpacken, ohne eine herkömmliche Verpackungsschale zu verwenden, in oder über eine Ausnehmung 3 bzw. Öffnung 4 des Siegelaufsatzes 2 ein elastisch verformbares Elementes 8 einzusetzen. Dabei hat sich als vorteilhaft erwiesen, im Bereich der Ausnehmung 3 bzw. Öffnung 4 in den Siegelaufsatz 2 einen Absatz 9 vorzusehen in welchem eine Mehrzahl von Zapfenelementen 10 eingesetzt sind, die nach oben hin die Siegelkontur 7 gerade nicht überragen, bzw. unterhalb der Siegelkontur 7 enden.

Das elastisch verformbare Element 8 kann aus Gummi, temperaturunempfindlichen Kunststoff, Silikon oder anderen Materialien, wie bspw. beliebigen Textilien od. dgl. hergestellt sein.

Das elastische Element weist in dessen Randbereich eine Mehrzahl von Ösen 11 auf, die über die Zapfenelemente 10 zum Überdecken der Ausnehmung 3 bzw. Öffnung 4 greifen.

Die Funktionsweise der vorliegenden Erfindung ist folgende:

Wird bspw. eine geringe Menge an Nahrungsmittel, bspw. Aufschnitt, Wurst, Schinken, Käse, Fisch, Fleisch, Geflügel als Frischprodukt etc. verpackt, so wird, wie es in den Figuren 1 und 2 dargestellt ist, eine Folie 6 als Bodenfolie 12 auf das elastisch verformbare Element 8 aufgelegt, so dass die Bodenfolie 12 vorzugsweise allseits die Siegelkontur 7 übergreift. Anschliessend wird, wie es in Figur 2 angedeutet ist, auf die Bodenfolie 12 ein zuverpackendes Produkt 5, bspw. Aufschnitt, aufgelegt. Anschliessend wird auf das Produkt 5 allseits die Siegelkontur 7 übergreifend eine Deckfolie 13 aufgelegt. Zum Schliessen und Ausdrücken von Luft zwischen Bodenfolie 12 und Deckfolie 13 drücken entsprechende im Siegelaufsatz 2 eingesetzte Abstandhalter 14 die Deckfolie 13 gegen das Produkt 5 und die Bodenfolie 12. Die Abstandhalter 14 ragen aus einer Unterseite 15 der Siegelplatte 1 hervor und beabstanden gleichzeitig die Deckfolie 13 von der beheizten Unterseite 15 der Siegelplatte 1.

Auf diese Weise wird lediglich die Deckfolie 13 mit der Bodenfolie 12 beim Heisssiegeln und beim Auflegen der Siegelplatte 1 auf den Siegelaufsatz 2 im Bereich der Siegelkontur 7 verbunden.

Dabei können die Abstandhalter 14 zylindrisch oder konisch in die Siegelplatte 1 eingesetzt sein und vorzugsweise aus temperaturbeständigem elastischen Material, insbesondere Silikon gebildet sein. Diese ragen aus der Unterseite 15 der Siegelplatte 1 heraus und sind endseits gewölbt, abgeschrägt oder zylindrisch auslaufend ausgebildet. Hierauf sei die Erfindung nicht beschränkt.

Auch soll im Rahmen der vorliegenden Erfindung liegen, wie es insbesondere in Figur 1 angedeutet ist, dass die Abstandshalter 14 auch konisch in die Siegelplatte 1 eingesetzt sein können, so dass ein Herausfallen oder Herausziehen der einzelnen Abstandhalter 14 nicht möglich ist.

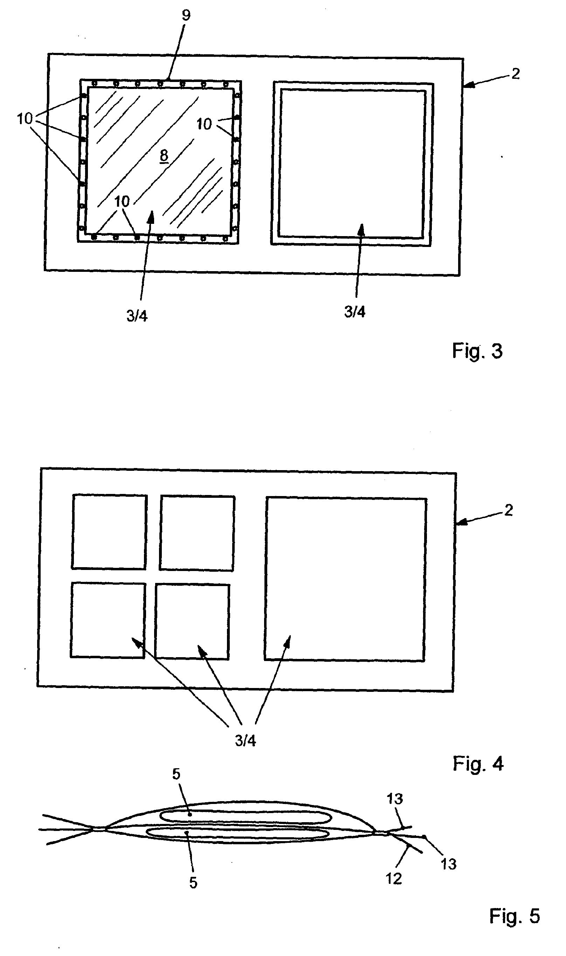

Ferner soll im Rahmen der vorliegenden Erfindung liegen, wie es in den Figuren 3 und 4 aufgezeigt ist, dass in einem Siegelaufsatz 2 auch unterschiedlich verteilt, angeordnete oder unterschiedlich gross ausgebildete Ausnehmungen 3 bzw. Öffnungen 4 vorgesehen sind, um unterschiedlich grosse Verpackungen herzustellen oder unterschiedliche Behälter einzusetzen.

Wichtig ist auch bei der vorliegenden Erfindung, dass lediglich durch Entnehmen des elastisch verformbaren Elementes 8 von der Ausnehmung 3 bzw. Öffnung 4 in diese herkömmliche Aufnahmeschalen zum Verpacken von beliebigen Produkten, insbesondere Lebensmitteln wieder eingesetzt werden können. Somit kann mit einem und demselben Siegelaufsatz 2 eine Verpackung hergestellt werden, die lediglich aus einer Bodenfolie 12 und einer Deckfolie 13 besteht, oder aus einem Aufnahmebehälter mit Deckfolie 13 gebildet ist.

Bei der vorliegenden Erfindung soll auch daran gedacht sein, bspw. auf die Bodenfolie 12 eine Mehrzahl von Deckfolien 13 aufzusiegeln, um dazwischen bspw. verschiedene Produkte 5 oder Produkte 5 in unterschiedlichen Mengen zu verpacken, wie es in Figur 5 angedeutet ist. Durch die Elastizität des Elementes 8 können auch dickere Produkte 5 oder mehrere Produkte 5 übereinander zwischen zumindest einer Bodenfolie 12 und zumindest einer Deckfolie 13 verpackt werden.

Anstelle von Abstandhalter 14 kann auch eine hitzebeständige Matte 16, insbesondere Gummi- oder Silikonmatte, wie sie in Figur 2 angedeutet ist, zwischen der Unterseite 15 der Siegelplatte 1 und der Deckfolie 13 fest oder einsetzbar vorgesehen sein kann, um die Deckfolie 13 von der Siegelplatte 1 zu beabstanden.

Ferner soll im Rahmen der vorliegenden Erfindung liegen, dass bspw., wie es in den Figuren 3 und 4 dargestellt ist, mit ein und derselben Siegelplatte 1 auch unterschiedliche Aufteilungen von Ausnehmungen 3, 4 mit ein und derselben Siegelplatte 1 bearbeitet werden können, wobei dann lediglich in den Bereichen der Ausnehmungen 3 bzw. Öffnungen 4, die entsprechenden Abstandhalter 14 angeordnet bzw. in der Siegelplatte 1 ausgerichtet sind.

Auf diese Weise wird lediglich, um bspw. unterschiedliche Verpackungen herzustellen in eine Heisssiegelmaschine ein unterschiedlicher Siegelaufsatz 2 eingesetzt.

| **Positionszahlenliste** | | | | | |
|---|---|---|---|---|---|
| 1 | Siegelplatte | 34 | | 67 | |
| 2 | Siegelaufsatz | 35 | | 68 | |
| 3 | Ausnehmung | 36 | | 69 | |
| 4 | Öffnung | 37 | | 70 | |
| 5 | Produkt | 38 | | 71 | |
| 6 | Folie | 39 | | 72 | |
| 7 | Siegelkontur | 40 | | 73 | |
| 8 | Element | 41 | | 74 | |
| 9 | Absatz | 42 | | 75 | |
| 10 | Zapfenelement | 43 | | 76 | |
| 11 | Ösen | 44 | | 77 | |
| 12 | Bodenfolie | 45 | | 78 | |
| 13 | Deckfolie | 46 | | 79 | |
| 14 | Abstandhalter | 47 | | | |
| 15 | Unterseite | 48 | | | |
| 16 | Matte | 49 | | | |
| 17 | | 50 | | | |
| 18 | | 51 | | | |
| 19 | | 52 | | | |
| 20 | | 53 | | X | Richtung |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Heisssiegelmaschine zum Verpacken von Produkten (5), insbesondere von Lebensmitteln mit zumindest einer Folie (6) und/oder einer Verpackung, wobei zum Versiegeln zumindest eine Siegelplatte (1) mit zumindest einem Siegelaufsatz (2) zusammenwirkt,
**dadurch gekennzeichnet,**
**dass** der zumindest einen Ausnehmung (3) oder Öffnung (4) des Siegelaufsatzes (2) ein nachgiebig bewegbares oder elastisch verformbares Element (8) zugeordnet ist.

2. Heisssiegelmaschine zum Verpacken von Produkten (5), insbesondere von Lebensmitteln mit zumindest einer Folie (6) und/oder einer Verpackung, wobei zum Versiegeln zumindest eine Siegelplatte (1) mit zumindest einem Siegelaufsatz (2) zusammenwirkt, **dadurch gekennzeichnet, dass** der zumindest einen Siegelplatte (1) eine Mehrzahl von Abstandhalter (14) zugeordnet sind.

3. Heisssiegelmaschine nach Anspruch 2, **dadurch gekennzeichnet, dass** die Abstandhalter (14) in die Siegelplatte (1) formschlüssig eingesetzt sind.

4. Heisssiegelmaschine nach Anspruch 3, **dadurch gekennzeichnet, dass** die Abstandhalter (14) aus einem elastisch verformbaren Material gebildet sind.

5. Heisssiegelmaschine nach wenigstens einem der Ansprüche 3 bis 4, **dadurch gekennzeichnet, dass** die Abstandhalter (14) form- oder kraftschlüssig in die Siegelplatte (1) eingesetzt sind.

6. Heisssiegelmaschine nach wenigstens einem der Ansprüche 3 bis 5, **dadurch gekennzeichnet, dass** die Abstandhalter (14) konisch ausgebildet sind und formschlüssig in eine entsprechend passende Öffnung (4) der Siegelplatte (1) eingesetzt sind.

7. Heisssiegelmaschine nach wenigstens einem der Ansprüche 3 bis 6, **dadurch gekennzeichnet, dass** die Abstandhalter (14) in wählbaren, gleichen oder unterschiedlichen Abständen aus der Siegelplatte (1) hervorragen.

8. Heisssiegelmaschine nach wenigstens einem der Ansprüche 3 bis 7, **dadurch gekennzeichnet, dass** die Abstandhalter (14) gegenüber der Siegelplatte (1) bewegbar, insbesondere federbeaufschlagt sind.

9. Heissiegelmaschine nach wenigstens einem der Ansprüche 3 bis 8, **dadurch gekennzeichnet, dass** die Abstandhalter (14) endseits eben, spitz, gewölbt oder abgeschrägt ausgebildet sind.

10. Heisssiegelmaschine nach wenigstens einem der Ansprüche 3 bis 9, **dadurch gekennzeichnet, dass** eine Mehrzahl von Abstandhaltern (14) in einem Bereich, passend zur Ausnehmung (3) oder Öffnung (4) des Siegelaufsatzes (2) ausgerichtet in der Siegelplatte (1) angeordnet sind.

11. Heisssiegelmaschine nach wenigstens einem der Ansprüche 3 bis 10, **dadurch gekennzeichnet, dass** durch Anordnung und Gruppierung einer Mehrzahl von Abstandhalter (14), unterschiedliche Siegelaufsätze (2), mit unterschiedlich ausgebildeten Ausnehmungen (3) oder Öffnung (4), oder mit einer unterschiedlichen Anzahl von Ausnehmungen (3) oder Öffnungen (4) zusammen passt, so dass die Abstandhalter (14) jeweils innerhalb oder ausserhalb von Siegelkonturen (7) angeordnet sind.

12. Heisssiegelmaschine nach wenigstens einem der Ansprüche 1 bis 11, **dadurch gekennzeichnet, dass** das elastisch verformbare Elemente (8) wiederlösbar mit dem Siegelaufsatz (2) verbindbar ist.

13. Heisssiegelmaschine nach wenigstens einem der Ansprüche 1 bis 12, **dadurch gekennzeichnet, dass** das elastisch verformbare Element (8) die Ausnehmung (3) oder die Öffnung (4) zumindest teilweise überdeckt.

14. Heisssiegelmaschine nach wenigstens einem der Ansprüche 1 bis 13, **dadurch gekennzeichnet, dass** im Bereich der Ausnehmung (3) bzw. Öffnung (4) im Siegelaufsatz (2) ein Absatz (9) zum wiederauflösbaren Festlegen des elastisch verformbaren Elementes (8) vorgesehen ist.

15. Heisssiegelmaschine nach Anspruch 14, **dadurch gekennzeichnet, dass** der Absatz (9) im Siegelaufsatz (2) zumindest teilweise umlaufend ausgebildet ist und ein Mehrzahl von herausragenden Zapfenelemente (10) aufweist.

16. Heisssiegelmaschine nach Anspruch 15, **dadurch gekennzeichnet, dass** das elastisch verformbare Element (8) eine Mehrzahl von Ösen (11) aufweist, die mit den Zapfenelementen (10) des elastischen Elementes (8) zur Überdeckung der Ausnehmung (3) bzw. der Öffnung (4), in Eingriff stehen.

17. Heisssiegelmaschine nach wenigstens einem der Ansprüche 1 bis 16, **dadurch gekennzeichnet, dass** das elastisch verformbare Element (8) in oder über die Ausnehmung (3) bzw. Öffnung (4) ggf. mittels eines Hilfrahmens od. dgl. eingespannt oder eingesetzt ist.

18. Heisssiegelmaschine nach wenigstens einem der Ansprüche 1 bis 17, **dadurch gekennzeichnet, dass** auf das elastisch verformbare Element (8) eine Bodenfolie (12), darauf ein Produkt (5) oder Lebensmittel auflegbar ist, und über eine Deckfolie (13) das Produkt (5) durch Heisssiegeln zur Verpackung schliessbar ist, wobei vor dem Heisssiegeln über die Abstandhalter (14) die verbleibende Luft zwischen Bodenfolie (12) und Deckfolie (13) ausdrückbar ist.

19. Heisssiegelmaschine nach Anspruch 18, **dadurch gekennzeichnet, dass** eine Mehrzahl von Deckfolien (13) mit jeweils dazwischen auf- oder eingebrachten Produkten (5) aufeinanderlegbar, insbesondere heisssiegelbar ist.

20. Heisssiegelmaschine nach wenigstens einem der Ansprüche 3 bis 19, **dadurch gekennzeichnet, dass** als Abstandhalter (14) eine hitzebeständige Matte (16), insbesondere hitzebeständige Silikon- oder Gummimatte zwischen Siegelplatte (1) und Siegelaufsatz (2) einlegbar oder eingesetzt ist.
